# EUROPEAN PATENT APPLICATION

(11) **EP 4 723 351 A1**
(43) Date of publication of application: **08.04.2026**
(21) Application number: 25195612.4
(22) Date of filing: 13.08.2025
(51) Int. Cl.: H01M 50/358, H01M 50/317, H01M 50/367, H01M 50/209, H01M 50/291, H01M 10/613

(54) **POWER STORAGE DEVICE**

(30) Priority: 01.10.2024 JP 2024172449
(71) Applicant: TOYOTA JIDOSHA KABUSHIKI KAISHA, Toyota-shi, Aichi-ken 471-8571 (JP)
(72) Inventor: IWATA, Makoto, Toyota-shi, 471-8571 (JP); ISHIKAWA, Shotaro, Toyota-shi, 471-8571 (JP); FUJIWARA, Shunsuke, Toyota-shi, 471-8571 (JP); NAKAMURA, Soichiro, Toyota-shi, 471-8571 (JP); NAKANO, Takahiko, Toyota-shi, 471-8571 (JP); SUZUKI, Kosuke, Toyota-shi, 471-8571 (JP); ISHIZUKA, Masahiro, Toyota-shi, 471-8571 (JP); MATSUO, Kensuke, Toyota-shi, 471-8571 (JP); KUMAZAWA, Kazuya, Toyota-shi, 471-8571 (JP)
(74) Representative: TBK

(57) **Abstract**

A power storage device (10) comprises a plurality of power storage cells (100), a lower case including a bottom wall (212), and a partition plate (250) provided between the plurality of power storage cells and the bottom wall. Each power storage cell (100) has a lower surface provided with a safety valve (SV). The bottom wall (212) includes a supporting portion (212a) that supports the partition plate, and a groove (212b) that protrudes from the supporting portion downward and has a shape extending in one direction. The partition plate (250) includes a connected portion (252) connected to the supporting portion, and a lidding portion (254) located above the groove and cooperating with the groove to form an emission path (S). The lidding portion (254) has a plurality of through holes (254h) each provided at a position facing the safety valve (SV).

## Description

### CROSS REFERENCE TO RELATED APPLICATIONS

This nonprovisional application is based on Japanese Patent Application No. 2024-172449 filed on October 1, 2024 with the Japan Patent Office, the entire contents of which are hereby incorporated by reference.

### BACKGROUND

### Field

The present disclosure relates to a power storage device.

### Description of the Background Art

For example, Japanese National Patent Publication No. 2023-550400 discloses a battery comprising a plurality of cells, a beam surrounding the plurality of cells, a thermal management member disposed below the plurality of cells, and a protective component disposed below the thermal management member. The thermal management member and the protective component form a collection chamber below each cell for collecting emissions discharged from the cell. A sealing member is provided at a connection between the thermal management member and the protective component.

### SUMMARY

There is a concern for the battery disclosed in Japanese National Patent Publication No. 2023-550400, that is, water may enter the collection chamber (or an emission path) through a gap between the thermal management member and the protective component and come into contact with a cell.

An object of the present disclosure is to provide a power storage device capable of preventing water from entering an emission path and coming into contact with a power storage cell.

In one aspect of the present disclosure, a power storage device comprises: a plurality of power storage cells aligned in one direction; a lower case including a bottom wall disposed below the plurality of power storage cells; and a partition plate provided between the plurality of power storage cells and the bottom wall, wherein the plurality of power storage cells each have a lower surface provided with a safety valve, the bottom wall includes a supporting portion that supports the partition plate and a groove that protrudes from the supporting portion downward and has a shape extending in the one direction, the partition plate includes a connected portion connected to the supporting portion and a lidding portion located above the groove and cooperating with the groove to form an emission path, and the lidding portion has a plurality of through holes each provided at a position facing the safety valve.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 is a diagram schematically showing a vehicle comprising a power storage device according to an embodiment of the present disclosure.
Fig. 2 is a perspective view schematically showing the power storage device.
Fig. 3 is a plan view schematically showing the power storage device with an upper cover removed.
Fig. 4 is a perspective view schematically showing a relationship between a lower case and a partition plate.
Fig. 5 is a cross section taken along a line V-V indicated in Fig. 3.
Fig. 6 is a cross section taken along a line VI-VI indicated in Fig. 3.

### DESCRIPTION OF THE PREFERRED EMBODIMENTS

An embodiment of the present disclosure will now be described with reference to the drawings. In the drawings referred to below, identical or equivalent components are identically denoted.

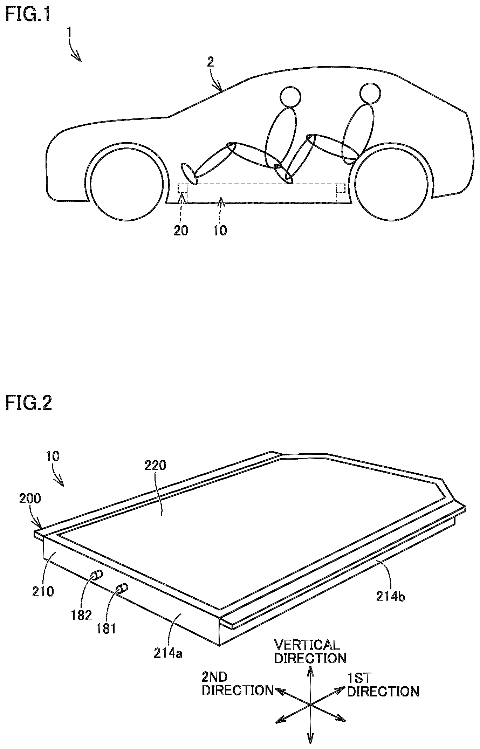

Fig. 1 is a diagram schematically showing a vehicle comprising a power storage device according to an embodiment of the present disclosure. Fig. 2 is a perspective view schematically showing the power storage device.

As shown in Fig. 1, a vehicle 1 comprises a vehicular body 2 and a power storage device 10. Examples of vehicle 1 include a hybrid electric vehicle, a plug-in hybrid vehicle, and a battery electric vehicle.

As shown in Fig. 1, vehicular body 2 includes a frame member 20. Frame member 20 is disposed at a bottom portion of vehicular body 2. Frame member 20 is generally formed in a quadrangular hollow cylinder surrounding power storage device 10.

Power storage device 10 is attached to frame member 20. As shown in Figs. 1 to 5, power storage device 10 comprises six power storage stacks 11 to 16, a housing 200, a partition plate 250, a variety of types of devices 300, a device cooler 350, and a coolant pipe 400. The power storage stack is not limited to six in number.

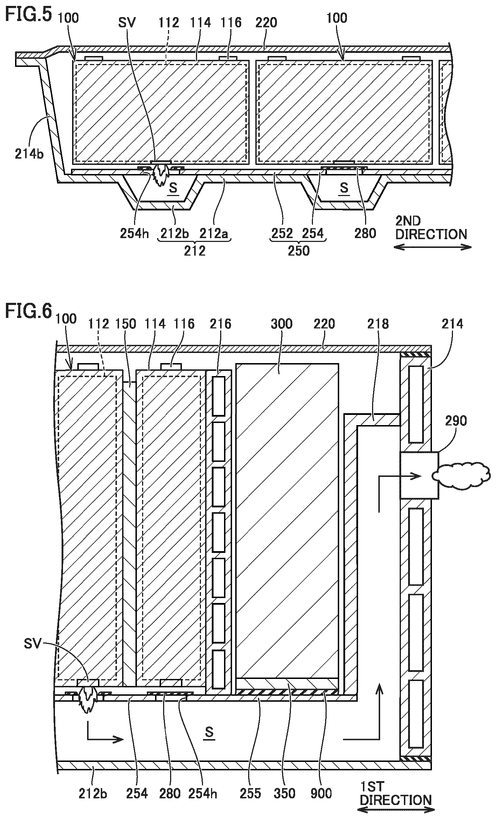

Power storage stacks 11 to 16 are each formed in a rectangular parallelepiped elongate in a first direction. As shown in Fig. 2, the six power storage stacks 11 to 16 are aligned in a second direction orthogonal to both the first direction and the vertical direction. As shown in Fig. 6, power storage stacks 11 to 16 each include a plurality of power storage cells 100 and a plurality of cooling plates 150. For example, each power storage cell 100 included in a first power storage stack 11 is an example of "a power storage cell" in the present disclosure, and each power storage cell 100 included in a second power storage stack 12 is an example of "another power storage cell" in the present disclosure.

The plurality of power storage cells 100 are aligned in the first direction. As shown in Figs. 5 and 6, each power storage cell 100 includes an electrode body 112, a cell casing 114, and a pair of external terminals 116.

Electrode body 112 may be configured by a wound body having a positive electrode sheet and a negative electrode sheet wound with a separator interposed or may be configured by a stack of a positive electrode sheet and a negative electrode sheet with a separator interposed. Electrode body 112 is formed in a shape elongate in the second direction.

Cell casing 114 accommodates electrode body 112. Cell casing 114 is formed in a rectangular parallelepiped. Cell casing 114 is made of metal such as aluminum. Cell casing 114 has a lower surface provided with a safety valve SV.

The pair of external terminals 116 is provided on an upper surface of cell casing 114. The paired external terminals 116 are provided at positions spaced from each other in a widthwise direction of cell casing 114. The widthwise direction corresponds to the second direction.

As shown in Fig. 6, each cooling plate 150 is disposed between a pair of power storage cells 100 adjacent to each other in the first direction. Each cooling plate 150 is formed in a flat plate elongate in the second direction. Each cooling plate 150 has a channel (not shown) to pass a coolant therethrough in the second direction.

Housing 200 houses the six power storage stacks 11 to 16. As shown in Figs. 2 to 6, housing 200 includes a lower case 210 and an upper cover 220.

Lower case 210 is open upward. Lower case 210 may be formed of metal such as aluminum. Lower case 210 includes a bottom wall 212, a peripheral wall 214, and a pair of partition walls 216.

Bottom wall 212 is located below power storage stacks 11 to 16. Bottom wall 212 includes a plurality of supporting portions 212a and a plurality of grooves 212b. Bottom wall 212 may be formed by pressing a single metal plate.

Each supporting portion 212a supports partition plate 250. Each supporting portion 212a is formed flat. Each supporting portion 212a extends in the first direction. Supporting portions 212a are spaced from one another and thus aligned in the second direction.

Each groove 212b is shaped to protrude from supporting portion 212a downward and also extend in the first direction. Grooves 212b face one another in the second direction. As shown in Fig. 5, each groove 212b is formed below safety valve SV of each power storage cell 100 included in each of power storage stacks 11 to 16.

Note that, for example, groove 212b located below each power storage cell 100 included in the first power storage stack 11 is an example of "a groove" in the present disclosure, and groove 212b located below each power storage cell 100 included in the second power storage stack 12 is an example of "another groove" in the present disclosure.

Peripheral wall 214 stands from a peripheral portion of bottom wall 212. Peripheral wall 214 has a shape surrounding power storage stacks 11 to 16. Peripheral wall 214 includes a front wall 214a and a pair of side walls 214b.

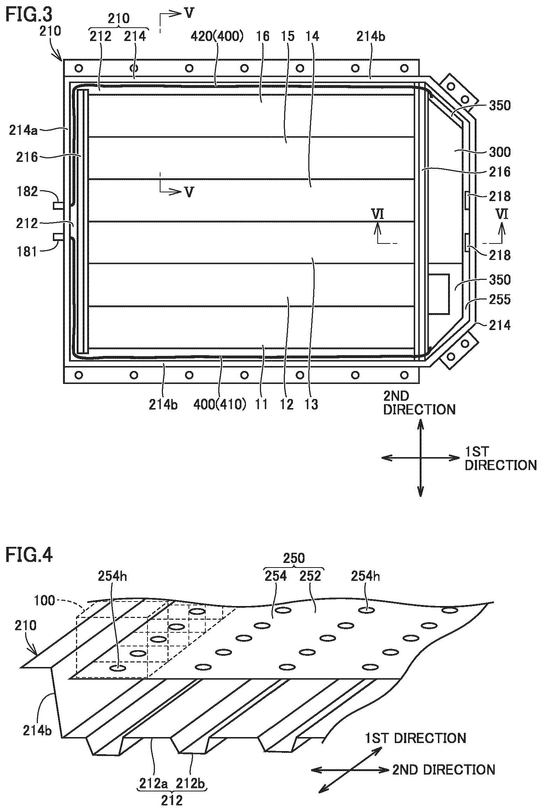

Front wall 214a is formed on one side of each of power storage stacks 11 to 16 in the first direction (a left side in Fig. 3). Front wall 214a extends in the second direction. In the present embodiment, one side in the first direction corresponds to a front side of the vehicle in the longitudinal direction of the vehicle.

The paired side walls 214b are spaced from each other in the second direction and thus opposed to each other. Each side wall 214b extends in the first direction. Each side wall 214b has one end in the first direction (or a front end) contiguous to front wall 214a.

The pair of partition walls 216 partitions a space that is surrounded by bottom wall 212 and peripheral wall 214 into a space in which power storage stacks 11 to 16 are disposed and another space. The paired partition walls 216 are spaced from each other in the first direction. Each partition wall 216 extends in the second direction. Each partition wall 216 may be hollowed. The pair of partition walls 216 has a function of restraining power storage stacks 11 to 16 on opposite sides in the first direction. As shown in Fig. 3, partition wall 216 formed on one side in the first direction (or on the front side) has ends in the second direction each spaced from side wall 214b. Partition wall 216 formed on the other side in the first direction (or on a rear side) has ends in the second direction each contiguous to side wall 214b.

Upper cover 220 is disposed above power storage stacks 11 to 16. Upper cover 220 cooperates with lower case 210 to accommodate the six power storage stacks 11 to 16. Specifically, upper cover 220 cooperates with lower case 210 to enclose and thus accommodate the six power storage stacks 11 to 16. Upper cover 220 has a peripheral portion bolted or similarly connected to an upper end of peripheral wall 214 via a sealing member.

Partition plate 250 is provided between the plurality of power storage cells 100 and bottom wall 212. Specifically, partition plate 250 is provided between each of power storage stacks 11 to 16 and bottom wall 212. Partition plate 250 is made of metal. Partition plate 250 is formed in a flat plate. Partition plate 250 includes a connected portion 252 and a lidding portion 254. Fig. 4 shows partition plate 250 spaced upward from bottom wall 212.

Connected portion 252 is welded or similarly connected to each supporting portion 212a.

Lidding portion 254 is contiguous to connected portion 252 in the second direction. Lidding portion 254 is located above each groove 212b. Lidding portion 254 cooperates with groove 212b to form an emission path S. Emission path S is a path for discharging out of housing 200 a gas discharged from power storage cell 100 through safety valve SV. As shown in Figs. 4 to 6, lidding portion 254 has a plurality of through holes 254h. Each through hole 254h is provided at a position facing safety valve SV.

Note that, for example, lidding portion 254 located above groove 212b located below the first power storage stack 11 is an example of a "lidding portion" in the present disclosure, and each through hole 254h provided through the "lidding portion" is an example of a "through hole" in the present disclosure. Furthermore, lidding portion 254 located above groove 212b located below the second power storage stack 12 is an example of "another lidding portion" in the present disclosure, and each through hole 254h provided through the "another lidding portion" is example of "another through hole" in the present disclosure.

As shown in Figs. 5 and 6, lidding portion 254 may be provided with a thermal insulating member 280 that closes each through hole 254h. Thermal insulating member 280 has a function of protecting each power storage cell 100 against the gas discharged through safety valve SV. Thermal insulating member 280 is made for example of mica obtained by hot pressing and thus hardening a natural inorganic mineral. Each thermal insulating member 280 has a shape covering through hole 254h. In Fig. 4, thermal insulating member 280 is not shown.

As shown in Fig. 6, lidding portion 254 may have a closure portion 255. Closure portion 255 closes, from above, a space of emission path S outside of partition wall 216 in the first direction. Closure portion 255 extends rearward from rear partition wall 216 located rearward. Closure portion 255 may have an end portion contiguous to peripheral wall 214.

As shown in Figs. 3 and 6, an emission duct 218 is formed at peripheral wall 214. Emission duct 218 extends upward from closure portion 255. Emission duct 218 guides gas upward from emission path S. Emission duct 218 has a downstream end provided with an explosion-proof valve 290. Explosion-proof valve 290 releases the pressure inside housing 200. Explosion-proof valve 290 opens when the pressure inside housing 200 is equal to or higher than a reference value. Explosion-proof valve 290 includes a check valve. As shown in Fig. 6, when any power storage cell 100 discharges gas, the gas spreads in the first direction through emission path S and is discharged out of housing 200 through emission duct 218 and explosion-proof valve 290.

The variety of types of devices 300 are housed in housing 200. As shown in Figs. 3 and 6, the variety of types of devices 300 are disposed in a space formed between peripheral wall 214 and partition wall 216 formed on the other side of lower case 210 in the first direction, that is, on the other side in the first direction (or on the rear side). The variety of types of devices 300 is disposed above closure portion 255. The variety of types of devices 300 may include a junction box. The variety of types of devices 300 may include a relay, a controller, etc.

Device cooler 350 cools the variety of types of devices 300. As shown in Figs. 3 and 6, device cooler 350 is provided between closure portion 255 and the variety of types of devices 300. A thermally conductive adhesive 900 may be provided between device cooler 350 and bottom wall 212.

Coolant pipe 400 is routed in housing 200. Coolant pipe 400 leads to each cooling plate 150 and device cooler 350. As shown in Figs. 2 and 3, peripheral wall 214 at front wall 214a is provided with an inlet port 181 and an outlet port 182. Coolant pipe 400 is connected to inlet port 181 and outlet port 182. Inlet port 181 receives a coolant (water, oil, or the like) which in turn passes through coolant pipe 400, flows into each cooling plate 150 and device cooler 350, cools each power storage cell 100 and the variety of types of devices 300, and thereafter passes through coolant pipe 400 and thus flows out through outlet port 182.

As shown in Fig. 3, coolant pipe 400 includes an upstream pipe 410 and a downstream pipe 420.

Upstream pipe 410 has an upstream end connected to inlet port 181. Upstream pipe 410 has a downstream end connected to one end of device cooler 350 in the second direction. Upstream pipe 410 is routed to pass between front wall 214a and partition wall 216 formed on one side in the first direction and pass between power storage stack 11 and side wall 214b disposed on one side in the second direction. Upstream pipe 410 is connected to one end of each cooling plate 150 in the second direction.

Downstream pipe 420 has an upstream end connected to the other end of device cooler 350 in the second direction. Downstream pipe 420 has a downstream end connected to outlet port 182. Downstream pipe 420 is routed so as to pass between front wall 214a and partition wall 216 formed on one side in the first direction and pass between power storage stack 16 and side wall 214b disposed on the other side in the second direction. Downstream pipe 420 is connected to the other end of each cooling plate 150 in the second direction.

When power storage device 10 described above has any power storage cell 100 shorted or the like and thus discharging a gas downward through safety valve SV, the gas flows into emission path S through through hole 254h of partition plate 250.

Then, the gas flowing into emission path S spreads in the first direction along groove 212b, and is discharged out of housing 200 through explosion-proof valve 290 as shown in Fig. 6. This can suppress adhesion of an inclusion (so-called debris) of power storage cell 100 included in the emissions discharged from power storage cell 100 to external terminal 116 or the like of power storage cell 100.

Furthermore, the present power storage device 10 that has emission path S formed on bottom wall 212 of lower case 210 can prevent water from entering emission path S and hence coming into contact with power storage cell 100.

It will be understood by those skilled in the art that the exemplary embodiments described above are specific examples of the following aspects.

### [Aspect 1]

A power storage device comprising:
a plurality of power storage cells aligned in one direction;
a lower case including a bottom wall disposed below the plurality of power storage cells; and
a partition plate provided between the plurality of power storage cells and the bottom wall, wherein
the plurality of power storage cells each have a lower surface provided with a safety valve,
the bottom wall includes
   a supporting portion that supports the partition plate, and
   a groove protruding from the supporting portion downward and having a shape extending in the one direction,
the partition plate includes
   a connected portion connected to the supporting portion, and
   a lidding portion located above the groove and cooperating with the groove to form an emission path, and
the lidding portion has a plurality of through holes each provided at a position facing the safety valve.

The present power storage device that has an emission path formed on a bottom wall of a lower case can prevent water from entering the emission path and hence coming into contact with power storage cells.

### [Aspect 2]

The power storage device according to Aspect 1, further comprising a plurality of other power storage cells aligned in the one direction, wherein
the plurality of other power storage cells are opposed to the plurality of power storage cells in an orthogonal direction orthogonal to both the one direction and a vertical direction,
the bottom wall further includes another groove facing the groove in the second direction and having a shape extending in the one direction,
the partition plate further includes another lidding portion located above the other groove and cooperating with the other groove to form another emission path, and
the other lidding portion has a plurality of other through holes each provided at a position facing the safety valve of each other power storage cell.

This aspect for example prevents a gas discharged from one power storage cell to the emission path from moving toward another emission path.

### [Aspect 3]

The power storage device according to Aspect 1 or 2, wherein
the lower case has a pair of partition walls provided on opposite sides of the plurality of power storage cells in the one direction,
the partition plate includes a closure portion extending toward an outside of the partition wall in the one direction, and
the closure portion closes, from above, a space of the emission path outside of the partition wall in the one direction.

Although some embodiments the present disclosure have been described, it should be understood that the embodiments disclosed herein are by way of illustration and example only and not to be taken by way of limitation, the scope of the present disclosure being defined by the terms of the appended claims and intended to encompass any modification that falls within the meaning and scope equivalent to the terms of the claims.

## Claims

1. A power storage device (10) comprising:
a plurality of power storage cells (100) aligned in one direction;
a lower case (210) including a bottom wall (212) disposed below the plurality of power storage cells (100); and
a partition plate (250) provided between the plurality of power storage cells (100) and the bottom wall (212), wherein
the plurality of power storage cells (100) each have a lower surface provided with a safety valve (SV),
the bottom wall (212) includes
a supporting portion (212a) that supports the partition plate (250), and
a groove (212b) protruding from the supporting portion (212a) downward and having a shape extending in the one direction,
the partition plate (250) includes
a connected portion (252) connected to the supporting portion (212a), and
a lidding portion (254) located above the groove (212b) and cooperating with the groove (212b) to form an emission path (S), and
the lidding portion (254) has a plurality of through holes (254h) each provided at a position facing the safety valve (SV).

2. The power storage device (10) according to claim 1, further comprising a plurality of other power storage cells (100) aligned in the one direction, wherein
the plurality of other power storage cells (100) are opposed to the plurality of power storage cells (100) in an orthogonal direction orthogonal to both the one direction and a vertical direction,
the bottom wall (212) further includes another groove (212b) facing the groove (212b) in the direction orthogonal to both the one direction and the vertical direction and having a shape extending in the one direction,
the partition plate (250) further includes another lidding portion (254) located above the other groove (212b) and cooperating with the other groove (212b) to form another emission path (S), and
the other lidding portion (254) has a plurality of other through holes (254h) each provided at a position facing the safety valve (SV) of each other power storage cell (100).

3. The power storage device (10) according to claim 1 or 2, wherein
the lower case (210) has a pair of partition walls (216) provided on opposite sides of the plurality of power storage cells (100) in the one direction,
the partition plate (250) includes a closure portion (255) extending toward an outside of the partition wall (216) in the one direction, and
the closure portion (255) closes, from above, a space of the emission path (S) outside of the partition wall (216) in the one direction.
